# EUROPEAN PATENT APPLICATION

(11) **EP 0 714 939 A2**
(43) Date of publication of application: **05.06.1996**
(21) Application number: 95500154.0
(22) Date of filing: 08.11.1995
(51) Int. Cl.: C08L 23/12

(54) **Polymeric modifications for thermoforming applications**

(30) Priority: 10.11.1994 ES 9402315
(71) Applicant: REPSOL QUIMICA S.A., E-28046 Madrid (ES)
(72) Inventor: Fontan Miron, Eusebio, E-28028 Madrid (ES); Tercero Lopez, Jose Maria, E-28027 Madrid (ES); Jorge Tapia, Graciano, E-28030 Madrid (ES)
(74) Representative: Garcia Cabrerizo, Francisco

(57) **Abstract**

Polymeric modifications for thermoforming applications in conventional equipment, understanding as such those that have not been designed or modified specially for the thermoforming of polypropylene, in which the modified polymer is an isotactic homopolymer polypropylene and the modifying polymer is high density polyethylene, understanding as such ethylene homopolymers and ethylene copolymers and alpha-olefins of a density equal or larger than 0.935 gr/cm3. The modifying polymer has a fluidity index, measured according to ISO-1133 standard at 190 °C and 21.6 kg, inferior to 50 gr/10 min and a proportion between 5 and 25 % in weight. This modification can be done by means of mixing both fused components in high shear polymer mixing equipment, such as mixing rollers, internal mixers, double spindle extruders, etc., all of which are well known and extensively used in the thermoplastic polymer industry.

The polypropylene thus modified has properties that are essentially the same as unmodified polypropylene, and presenting the characteristic that it can be molded in conventional thermoforming equipment, with a wide range of process conditions and operating in a continuous manner, a fact that is not possible with unmodified polypropylene.

## Description

The present invention relates to a method to modify polypropylene with small quantities of high density and high molecular weight polyethylene, by means of the process of fused melted mixtures, which permits the use of polymeric material in thermoforming applications in conventional automatic machines that work continuously, which is not possible in the case of polypropylene that has not been modified.

The thermoforming process consists essentially of molding a sheet of thermoplastic polymer by heating the same until fusion is achieved. In a continuous process, which is the standard in industry, the hot sheet at a temperature of fusion or molding is transported to the thermoforming station that houses a single or a multiple mold. In that moment, the moldable hot sheet adjusts itself to the mold's walls by means of well known state-of-the-art techniques, that range from vacuum systems between the mold and the fused sheet, to pressurized air applied on the sheet, including support mechanisms such as moving the mold towards the sheet or the sheet towards the mold by means of a piston that is adjusted to it. Combined systems can also be used. Once the cast is cold, it is removed from the machine and proceed with the next step.

This process demands that all the thermoplastic materials used present a good stability for molding purposes when in the form of a hot sheet, which is known as a high resistance in the melted state. This fundamental property for the thermoforming process prevents the unloosening of the sheet during the process, thus allowing it to continue without interruptions or problems. The unloosening of the melted sheet would impede its displacement and posterior thermoforming and would therefore interrupt the process. This is precisely what happens with unmodified polypropylene and the reason for this invention.

It is a well known fact that there are a series of thermoplastic polymers which hot sheets do not become detached at the temperature of molding, and are therefore adequate for the thermoforming process. Representative examples of these are polystyrene (PS), acrylonitrile butadiene styrene (ABS), styrene acrylonitrile (SAN); polymethyl metacrylate (PMMA); high density polyethylene (HDPE); polycarbonate (PC); vinyl polychloride (VPC), etc. All these are used in thermoforming processes to fabricate objects that have many applications in the food industry (container), automobile industry, appliances, household items, medicine, etc.

Other thermoplastic polymers such as polypropylene isotactic homopolymer (PP) and the heterophasic copolymers of propylene and ethylene, present a series of ideal characteristics for the previously mentioned applications, such as chemical resistance, stiffness, high temperature resistance (they can be sterilized and used in microwave ovens), excellent environmental compliance, low weight, excellent sheen and superficial aspect, etc. In spite of these excellent properties, as well as other economic ones, all present the inconvenience that all the fused sheets become easily unattached thus rendering the thermoforming molding process unviable in conventional equipment in which the aforementioned polymeric materials do not present any difficulties.

According to the state of the art, there are two known ways of thermoforming PP. One of these uses very sophisticated thermoforming equipment, specially designed for this material. The main inconvenience is that they are much more expensive than conventional equipment, slow and cannot handle wide sheets. The other system consists of modifying the polymer to make it more resistant in the melted state and thus avoid detachment of the fused sheet, and thereby improving the limits of the thermoforming process conditions to the extent of being able to use conventional machines. The known ways to modify PP are as follows:
1) Modification with small quantities of a propylene copolymer and an acrylic comonomer. "Rheology of acrylic-modified polypropylene for thermoforming, Polyolefins VIII, SPE".
2) Modification by slight crosslinking, approximately 5%, by electron beam radiation. "Material options expand in sheet-fed thermoforming, MPI August/93".
3) Modification by mixtures with polystyrene. A good example of this modification is the Optum series by Ferro Corporation, in which the processing range is increased to 40 °C or 8-10 seconds, and thus maintaining or improving the properties of conventional PP. "Materials options expand in sheet-fed thermoforming, MPI, August/93".

The present invention is based on a system to modify isotactic polypropylene homopolymer or the heterophasic copolymer of propylene and ethylene with a melted blends with high density polyethylene, that is ethylene homopolymers or ethylene copolymers and alpha-olefins with a density equal or superior to 0.935 gr/cm3 and a high molecular weight, which means a high fluidity index according to the ISO-1133 standard at 190 °C and 21.6 kg inferior to 50 gr/10 min and a concentration between 5 and 25 %.

It is possible to add antioxidants, sliding, nucleating and antistatic agents, pigments, etc., that are well known and used in polypropylene industry, which has been demonstrated that do not affect the fundamental problem of detachment and processing of this material in conventional thermoforming equipment, which is the object of this present invention.

Mineral loads can be added such as talcum, calcium carbonate, etc. or impact improvers such as ethylene and polypropylene rubber EPR or EPDM, etc. to modify some properties of the original polymer such as impact resistance or rigidity, which is a well known technique used extensively in the polypropylene industry, and that do not affect the detachment properties and processability of PP in conventional thermoforming equipment, object of this present invention.

This modification of polypropylene has reduced the effect of detachment of the hot melted sheet quite substantially at moulding temperature to the levels achieved by other materials previously mentioned and that are normally used in thermoforming, and has also conserved the characteristic properties of the original polymer. It has also been proven that modified polypropylene according to this invention offers no difficulty in the manufacture of sheets or layers by any of the known methods, which is the previous operation to the thermoforming process. Finally, it has been confirmed that these sheets or layers can be thermoformed in conventional thermoforming equipment in a continuous mode, and within a wide range of processing conditions which include temperature and cycle length, something which is not possible with unmodified polypropylene, as can be proven in the following examples:

### EXAMPLE #1

An isotactic polypropylene homopolymer with a high fluidity index of 2 gr/10 min. measured according to ISO-1133 standard at 230 °C and 2.16 kg (I) was modified in a high shear blender with varying quantities of, ranging from 5 to 25 % in weight, of a high density polyethylene that had a density higher than 0.935 and a fluidity index less than 50 gr/10 min measured by the same previous standard but at 190 °C and 21.6 kg (II). Sheets of this modified PP were made of 1 mm thickness that were later submitted to a detachment test, which consists mainly in measuring the arrow of detachment in a 15 minute period of time starting from the moment it is introduced in an oven at a constant temperature and attached to a special steel support thus simulating the system used in a conventional thermoforming equipment.

Table 1 shows these results in mm of detachment. These results prove that the detachment is reduced drastically with the modifying agent (II), but which tapers off after a 20 % concentration.

**TABLE 1**

| DETACHMENT AS A FUNCTION OF MODIFIER (II) | |
|---|---|
| MODIFIER II (%) | DETACHMENT (mm) |
| 0 | >100 |
| 5 | 55 |
| 10 | 34 |
| 15 | 14 |
| 20 | 11 |
| 25 | 10 |

### EXAMPLE 2

The previous example was repeated maintaining the modifier (II) at 15 % and using as polypropylene, heterophasic copolymer of propylene and ethylene with a fluidity index at 230 °C and 2.16 kg of approximately 2 gr/10 min, but with varying ethylene contents between 2 and 12 %. Detachment was maintained in all cases to 14 mm, which is practically the same value obtained in example 1 for the same 15 % level of modifier. The unmodified polypropylenes all surpassed the 100 mm detachment value. This demonstrates that the sole responsible for the detachment arrow is the presence of modifier (II) and that this modifier has the same effect in isotactic homopolymer polypropylene and in propylene and ethylene heterophasic copolymers, also called polypropylene block copolymers.

### EXAMPLE 3

Example 1 was repeated, using the same components (I) and (II) but maintaining modifier (II) at a constant 15 % concentration. Nucleating agents, pigments, impact modifiers and mineral loads were added to this modified polypropylene. Detachment composition and results are shown in table 2. These results show that the detachment values are not altered by the addition of these products to the modified polypropylene according to the present invention.

**TABLE 2**

| DETACHMENT IN PP (I) MODIFIED WITH 15% HDPE (II) AND VARIOUS ADDITIVES | | | | |
|---|---|---|---|---|
| 1st ADDITIVE | % | 2nd ADDITIVE | % | DETACHMENT (mm) |
| White pigment | 1 | - | - | 16 |
| White pigment | 1 | Nucleating agent | 0,5 | 14 |
| White pigment | 1 | CO3Ca | 10 | 15 |
| Nucleating agent | 0,5 | - | - | 14 |
| CO3Ca | 10 | - | - | 15 |
| EP rubber | 12 | - | - | 14 |
| EPDM rubber | 6 | - | - | 15 |
| EP rubber | 6 | CO3Ca | 10 | 15 |

### EXAMPLE 4

The experiment in example 1 was repeated maintaining the same polypropylene (I) but using as modifier different types of high density polyethylene with a 15 % concentration and different molecular weights or fluidity indexes measured according to ISO-1133 standard at 190 °C and 21.6 kg. The different samples and their detachment results are shown in table 3. From these results one can deduce that the detachment value and the possibility of using thermoforming in conventional equipment is improved with the increase of molecular weight or the reduction of the modifier's fluidity index.

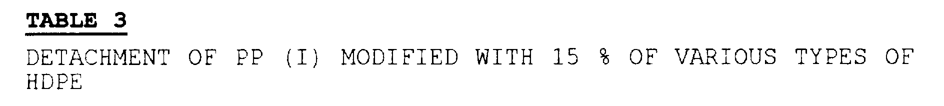

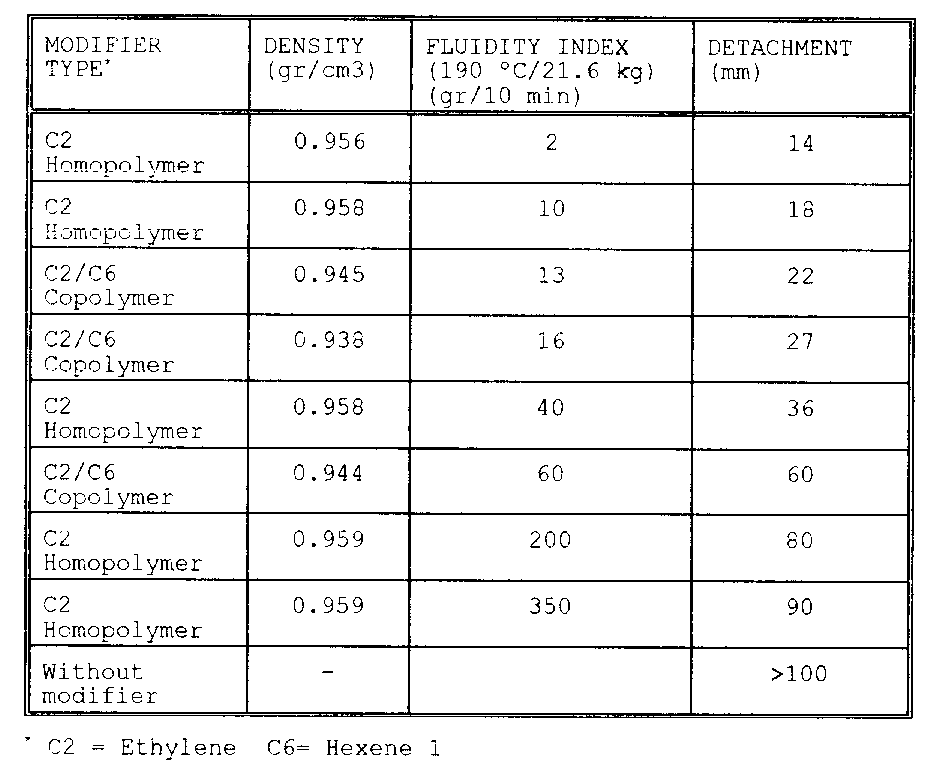

### EXAMPLE 5

In a double spindle extrusion machine, polypropylene defined in example 1 as (I) was modified with two types of high density polyethylene with a 15 % concentration. In the first case the modifier used in example 1 as (II) was used adding a small quantity of ethylene propylene rubber to act as an impact modifier and thus producing sample "A". In the second case, a high density polyethylene was used as modifier with smaller molecular weight and fluidity index, measured according to ISO-1133 standard at 190 °C and 21.6 kg, five times larger, but within the limits cited (III) and thus giving sample "B".

Modified polypropylene samples "A" and "B" and a control sample of unmodified polypropylene (I) are submitted to standard mechanical tests as well as the detachment defined as in example 1, and which results are shown in table 4. On the one hand, detachment data from previous examples is confirmed. On the other, it can be shown that these properties are similar in all three samples, with the exception that sample "A" has a larger impact resistance and a flexure modulus (rigidity) slightly less due to the impact improving agent that it contains. These data demonstrate that the polypropylene modified according to the present invention maintains its original properties, but these can also be willingly modified adding state of the art modifying agents or additives well known in the polyethylene industry.

Sheets were made with modified polypropylene samples "A" and "B" using an extrusion-calender equipment with a width of 140 cm and 0.75 mm thickness. The control sample used was unmodified polypropylene (I). Big differences were not noticed in the process nor in the aspect of the sheet, that did present in all three cases the high sheen characteristics of polypropylene.

Finally, the three fabricated sheets were molded using conventional thermoforming equipment used in a continuous manner, which is the norm in this industry. The control sample fabricated with unmodified polypropylene (I) was impossible to thermoform under any temperature or time cycle, which is a fact well known and expected. However, samples "A" and "B", that were fabricated with modified polypropylene according to the present invention, were thermoformed perfectly in a wide range of processing conditions, including temperature, and length of thermoforming cycle.

This experiment clearly shows that polypropylene modified with small quantities of high density and high molecular weight polyethylene can be molded in conventional thermoforming equipment not designed specifically for polypropylene, using a wide range of process conditions, and without altering significantly the properties of the starting polypropylene.

**TABLE 4**

| PROPERTIES OF PP (I) AND OF MODIFIED SAMPLES "A" AND "B" | | | | |
|---|---|---|---|---|
| PROPERTIES | UNIT | PP(I) | PP "A" | PP"B" |
| Izod Impact at 23 °C | (J/M) | | | |
| - with notch | | 50 | 158 | 65 |
| - without notch | | 1600 | NF | NF |

| Traction test | | | | |
|---|---|---|---|---|
| Yield resistance | (MPa) | 34 | 29 | 34 |
| Yield elongation | (%) | 19 | 15 | 28 |
| Modulus | (MPa) | 640 | 510 | 580 |

| Flexure Test | | | | |
|---|---|---|---|---|
| Modulus | (Mpa) | 1580 | 1540 | 1580 |
| Maximum stress | (Mpa) | 53 | 52 | 54 |
| Detachment | (mm) | >100 | 14 | 18 |
| NF = No Fracture | | | | |

Once the nature of the invention has been sufficiently explained, as well as the way to carry it out, one must state that the former indicated dispositions are susceptible to further details as long as they do not alter the fundamental principle.

## Claims

1. Polymeric modifications for applications of thermoforming in conventional equipment, understanding as such, those that have not been designed or modified specially to thermoform polypropylene, characterized in that the modifying polymer is the isotactic homopolymer polypropylene and the modifier polymer is high density polyethylene, understanding as such ethylene homopolymers and ethylene copolymers and alfa-olefins with a density equal to or larger than 0.935 gr/cm3. The modifying polymer is characterized in that it has a fluidity index inferior to 50 gr/10 min, measured according to ISO-1133 standard at 190 °C and 21.6 kg, and a proportion between 5 and 25 % in weight. This modification can be achieved by mixing of both components in the fused state in high shear polymer mixing equipment, such as mixing rollers, internal mixers, double spindle extrusion mixers, etc., which are all well known and used in the thermoplastic polymer industry; polypropylene thus modified has properties that are essentially equal to unmodified polypropylene, with the characteristic that it can be molded in conventional thermoforming equipment, in a wide range of process conditions and operating continuously, which is not possible with unmodified polypropylene.

2. Modifications according to claim 1, characterized in that the modified polypropylene can be a heterophasic propylene and ethylene copolymer, also known as polypropylene block copolymer, or a mixture in any proportion of homopolymer and copolymer.

3. Modifications according to claim 1, characterized in that the modified polypropylene according to claims 1 and 2, can contain antioxidant, antistatic, sliding and nucleating additives, pigments, etc., as is known and usual in the polypropylene industry, without this having any influence on the fundamental object of this present invention.

4. Modifications according to claim 1, characterized in that the modified polypropylene according to claims 1 to 3 can contain mineral loads or impact modifying polymers that can alter the fundamental properties of the polypropylene, without this having any substantial effect on the fundamental object of the present invention.
